# EUROPÄISCHE PATENTANMELDUNG

(11) **EP 1 786 207 A2**
(43) Veröffentlichungstag der Anmeldung: **16.05.2007**
(21) Anmeldenummer: 06013300.6
(22) Anmeldetag: 28.06.2006
(51) Int. Cl.: H04N 7/173

(54) **Verfahren und System zur Durchführung einer interaktiven Fernsehsitzung**

(30) Priorität: 13.07.2005 DE 102005032681
(71) Anmelder: Deutsche Telekom AG, 53113 Bonn (DE)
(72) Erfinder: Hasemann, Jörg-Michael, Dr., 27321 Emtinghausen (DE)

(57) **Zusammenfassung**

Verfahren und System zur Durchführung einer interaktiven Fernsehsitzung zwischen wenigstens einem Fernseh-Teilnehmer (1) und einem Dienst-Anbieter (100), bei dem durch den Fernseh-Teilnehmer (1) ein interaktionsfähiges Fernsehprogramm über dessen Fernsehgerät (2) ausgewählt wird, wobei vom Fernseh-Teilnehmer (1) anschließend eine Overlay-Quelle einer von einem Zentralserver (4) aus ferngesteuerten interaktiven Anwendung auswählt wird, durch die das gewählte Fernsehprogramm mit einer graphischen Benutzeroberfläche bildlich überlagert wird, so dass der Fernseh-Teilnehmer (1) mit Hilfe einer Fernbedienung (5) über ein Telekommunikationsnetz (6) mit dem Zentralserver (4) in Verbindung tritt, um auf Inhalte des dargebotenen Fernsehprogramms nach den durch die graphische Benutzeroberfläche bereitgestellten Optionen zu reagieren.

## Beschreibung

Die vorliegende Erfindung betrifft ein Verfahren sowie ein System zur Durchführung einer interaktiven Fernsehsitzung zwischen wenigstens einem Fernseh-Teilnehmer und einem Dienst-Anbieter, bei dem durch den Fernseh-Teilnehmer ein interaktionsfähiges Fernsehprogramm über dessen Fernsehgerät ausgewählt wird.

Derartige interaktive Fernsehanwendungen ermöglichen es, dem Fernseh-Teilnehmer benutzerspezifisch und gegebenenfalls auf Anforderung Informationen bereitzustellen, auf welche der Fernseh-Teilnehmer reagieren kann. Somit wird eine bidirektionale Kommunikation zwischen dem das Medium Fernsehen nutzenden Dienst-Anbieter und hieran interessierten Fernseh-Teilnehmern ermöglicht. Beispielsweise kann mittels interaktiver Fernsehsitzung ein Fernseh-Teilnehmer an einer Quizsendung des Fernsehens teilnehmen oder Käufe im Fernsehen angebotener Waren- und Dienstleistungen abwickeln. Das interaktive Fernsehen benötigt somit zum einen Sendekanal zur Übertragung des Fernsehprogramms vom TV-Sender zum Fernsehgerät des Fernseh-Teilnehmers. Zum anderen ist ein Rückkanal vom Fernseh-Teilnehmer zu dem das Fernsehprogramm veranlassenden Dienst-Anbieter erforderlich, um die Interaktionen des Fernseh-Teilnehmers zu den vorstehend als Beispiele angegebenen Zwecken zu verarbeiten.

Aus dem allgemeinen Stand der Technik ist bekannt, interaktive Fernsehsitzungen in Form von Zuschauerabstimmungen bei Unterhaltungssendungen oder politischen Sendungen durchzuführen. Hierbei reagiert der Fernseh-Teilnehmer per SMS oder auch per Sprachanruf über eine das Fernsehprogramm veröffentlichten Rufnummer, welche gewöhnlich mit verschiedenen Suffixen wählbar ist, um die möglichen Abstimmungsoptionen zu realisieren. Die Nutzungsmöglichkeiten sind aufgrund der Nutzung ganz unterschiedlicher Kommunikationssysteme für Sendekanal und Rückkanal recht eingeschränkt.

Aus der EP 0 804 856 B1 geht ein weiteres Verfahren zur Durchführung einer interaktiven Fernsehsitzung hervor, das sich die mit dem TV-Signal übertragenen Videotextinformationen zu Nutze macht. Auf Basis des Videotexts werden beispielsweise Multiple-Choice-Fragen gestellt und die erzielten Antwortpunkte aufaddiert. Gegen Ende des Spiels besteht die Möglichkeit, dass die Teilnehmer mit der höchsten Punktzahl über eine Telefonschnittstelle des Fernsehgeräts mit dem Fernsehstudio verbunden werden, um an einer Auslosung teilzunehmen. Bei der Verbindungsaufnahme zum Fernsehstudio wird die vom Fernseh-Teilnehmer erzielte Antwortpunktzahl an das Fernsehstudio übertragen. Es sind besondere Einrichtungen zur Verhinderung von Manipulationen erforderlich. Der Rückkanal wird bei dieser Technologie genauso wie der Sendekanal über das Fernsehgerät geführt, was zwar eine einfachere Nutzung dieser technischen Lösung gestattet; jedoch ist das Anwendungsgebiet dieses Standes der Technik sehr begrenzt auf Quizveranstaltungen, Versteigerungen und dergleichen.

Aus der EP 0 670 652 A1 geht eine Einrichtung und ein Verfahren zum Präsentieren einer verbesserten graphischen Bedienerschnittstelle zur Anzeige und zur Auswahl von Video-on-demand-Programmen hervor. Ein Video-on-demand-Server ist mit einem Kommunikationsmedium gekoppelt, welches wiederum mit einer Mehrzahl von Teilnehmern gekoppelt ist. Bei jedem Teilnehmer ist eine Set-Top-Box am Kommunikationsmedium angeschlosssen, um die digitalisierten Programme in Form von Filmen, Fernsehsignalen und dergleichen aus dem Video-on-Demand-Server auf dem heimischen Fernsehgerät zu empfangen. Die Set-Top-Box ist mit dem Fernsehgerät verbunden und enthält elektronische Module zur Kommunikation mit dem Video-on-Demand-Server, dem Teilnehmer und dem Fernsehgerät. Der Funktionsumfang dieses Zusatzgeräts ist jedoch auf den Abruf von Videos und verwandten Anwendungen begrenzt, so dass sich das Zusatzgerät nur recht eingeschränkt verwenden lässt.

Die DE 195 16 577 C2 offenbart ebenfalls ein Zusatzgerät, welches an ein Fernsehgerät angekoppelt ist, mit welchem eine Kommunikation mit einem Zentralserver erfolgt. Das Zusatzgerät ist hier ein Personalcomputer. Dem Personalcomputer ist ein separater Monitor zugeordnet, auf dem eine graphische Benutzeroberfläche dargestellt wird, die den Fernseh-Teilnehmer beim interaktiven Fernsehen unterstützt. Der Nachteil dieser Lösung besteht darin, dass der Fernseh-Teilnehmer neben dem Fernsehgerät auch den Monitor des Personal-Computers benötigt, um am interaktiven Fernsehen teilzunehmen, was die Bedienung recht umständlich gestaltet.

Es ist daher die Aufgabe der vorliegenden Erfindung, ein Verfahren sowie ein System zur Durchführung einer interaktiven Fernsehsitzung zu schaffen, mit dem eine breite Palette möglicher interaktionsfähiger Fernsehanwendungen bedienerfreundlich realisierbar ist.

Die Erfindung wird ausgehend von einem Verfahren gemäß dem Oberbegriff von Anspruch 1 in Verbindung mit dessen kennzeichnenden Merkmalen gelöst. Systemtechnisch wird die Aufgabe durch Anspruch 5 gelöst. Die jeweils rückbezogenen Ansprüche geben vorteilhafte Weiterbildungen der Erfindung wieder.

Die Erfindung schließt die verfahrenstechnische Lehre ein, dass vom Fernseh-Teilnehmer eine Overlay-Quelle einer von einem Zentralserver aus ferngesteuerten interaktiven Anwendung ausgewählt wird, durch die das gewählte Fernsehprogramm mit einer graphischen Benutzeroberfläche bildlich überlagert wird, so dass der Fernseh-Teilnehmer mit Hilfe einer Fernbedienung über ein Telekommunikationsnetz mit dem Zentralserver in Verbindung tritt, um auf Inhalte des dargebotenen Fernsehprogramms nach den durch die graphische Benutzeroberfläche bereitgestellten Optionen zu reagieren.

Der Vorteil der erfindungsgemäßen Lösung liegt insbesondere darin, dass parallel zum laufenden Fernsehprogramm per bildlicher Überlagerung benutzerindividuelle Dialoge und Darstellungen verwendet werden, und zwar gleichzeitig und an ein und demselben Fernsehgerät. Hierdurch können besonders interaktionsintensive Fernsehanwendungen komfortabel realisiert werden. So ist es beispielsweise denkbar, dass hochinteraktive Anwendungen, bei denen es auf die Schnelligkeit der Antwort eines Fernseh-Teilnehmers ankommt, bis hin zu schnellen Spielen zu realisieren. Denkbar sind somit beispielsweise Quizanwendungen parallel zum Fernsehprogramm, bei denen der Fernseh-Teilnehmer zu Inhalten des Fernsehprogramms gefragt wird, Antworten geben kann und jeder Fernseh-Teilnehmer für sich dann individuelle Darstellungen seiner persönlichen Antwortgeschwindigkeit und Trefferquote im Verhältnis zu anderen Fernseh-Teilnehmern bekommt. Somit wird mit der erfindungsgemäßen Lösung die Vorraussetzung dafür geschaffen, dass jeder Fernseh-Teilnehmer eine persönliche Rückmeldung von der ortsfernen zentralen interaktiven Anwendung bekommt. Gruppenbildungen in interaktiven Anwendungen - wie kollaborative Spielideen - sind ebenfalls möglich. Die Basis hierfür ist die zentrale interaktive Anwendung, welche auf dem Zentralserver läuft. Die erfindungsgemäße Bildüberlagerungstechnik ist darüber hinaus auch akzeptabel für nicht besonders technisch versierte Fernseh-Teilnehmer und somit besonders bedienerfreundlich.

Gemäß einer Verbesserung der Erfindung wird vorgeschlagen, dass nach Maßgabe der vom Fernseh-Teilnehmer gewählten Option (Antwort) durch die interaktive Anwendung an den Fernseh-Teilnehmer eine Reaktion in Form einer Darstellungsänderung auf der graphischen Benutzeroberfläche oder einer eingespielten akustischen Information ausgegeben wird. Gibt der Fernseh-Teilnehmer beispielsweise bei einer Quizsendung eine Antwort, welche die interaktive Anwendung als richtig auswertet, so kann die interaktive Anwendung daraufhin dem Fernseh-Teilnehmer die Richtigkeit seiner Antwort durch eine akustische Kennmelodie oder dergleichen signalisieren. Diese Reaktion der ortsfernen interaktiven Anwendung kann dem Fernseh-Teilnehmer also unmittelbar sichtbar bzw. hörbar gemacht werden.

Vorzugsweise wird durch die Overlay-Quelle eine bildhafte Ausgabe der interaktiven Anwendung als Videostream oder nach Art einer regelmäßig aktualisierten Webseite durchgeführt. Als Videostream eignen sich insbesondere komprimierte Video-Formate, wie avi-Dateien oder mpeg-Dateien und dergleichen. Diese Möglichkeit, die bildhaften Ausgabe der interaktiven Anwendung sowohl in Form von Standbildern als auch in Form von Videosequenzen zu realisieren, eröffnet ein breites Feld an Anwendungen im Rahmen interaktiver Fernsehsitzungen, wie Quizanwendungen, Verkaufsveranstaltungen, Spiele und dergleichen.

Zur Durchführung des vorstehend erläuterten erfindungsgemäßen Verfahrens eignet sich insbesondere ein System, das einen zu Wiedergabe des interaktionsfähigen Fernsehprogramms dienendes Fernsehgerät beim Fernseh-Teilnehmer umfasst, welches mit einem Home-Gateway zur Auswahl der Overlay-Quelle einer vom Zentralserver aus ferngesteuerten interaktiven Anwendung in Verbindung steht, um das ausgewählte Fernsehprogramm mit einer graphischen Benutzeroberfläche bildlich zu überlagern, so dass der Fernseh-Teilnehmer mit Hilfe einer Fernbedienung über einen am Home-Gateway anschließbares Telekommunikationsnetz mit dem Zentralserver in Verbindung kommt, um auf Inhalt des dargebotenen interaktiven Fernsehprogramms nach den durch die graphische Benutzeroberfläche bereitgestellten Optionen zu reagieren.

Das Home-Gateway ist dabei vorzugsweise als ein über eine Scart-Verbindung an das Fernsehgerät anschließbares Zusatzgerät - einer Art Top-Set-Box - ausgebildet, das weiterhin einen TV-Quelle-Anschluss und einen Telekommunikationsnetzanschluss aufweist. Natürlich ist es auch denkbar, ein solches Home-Gateway auch als Elektronikeinheit direkt in das Fernsehgerät zu integrieren, was in Folge dessen mit einem Telekommunikationsnetzanschluss zu versehen ist.

Für das am besagten Telekommunikationsnetzanschluss anzuschließende Telekommunikationsnetz eignet sich in erster Linie das INTERNET, an welches das Home-Gateway des Fernseh-Teilnehmers über einen breitbandigen Kommunikationskanal - beispielsweise DSL - angeschlossen ist. Durch den breitbandigen Kommunikationskanal wird die gewünschte schnelle Verbindung zwischen dem Home-Gateway und dem Zentralserver realisiert. Als Telekommunikationsnetz eignet sich jedoch auch ein breitbandiges Mobilfunknetz, ein WLAN-Netz und dergleichen.

Vorzugsweise enthält das Home-Gateway einen mit dem TV-Quelle-Anschluss eingangsseitig verbundenen herkömmlichen TV-Receiver. Der TV-Receiver erzeugt das Fernsehformat und kann beispielsweise in Form eines DVB-x-Decoders ausgebildet sein. Da die erfindungsgemäße Lösung sowieso den Telekommunikationsanschluss erfordert, ist es auch denkbar, dass Fernsehrsignal beispielsweise via DSL aus dem Telekommunikationsnetz zu beziehen und mit einem geeigneten DSL-Decoder in das Fernsehformat zu bringen. Bei dieser Detaillösung kann zum Anschluss der TV-Quelle und für die Telekommunikation mit dem Zentralserver ein einziger Anschluss genutzt werden.

Das Ausgangssignal des TV-Receivers wird einem mit dem Fernsehrgerät in Verbindung stehenden TV-Signals-Generator zugeleitet. Der ebenfalls hieran angeschlossene Overlay-Generator übersetzt die via Telekommunikationsnetz vom Zentralserver aus empfangenen Overlay-Informationen und übersetzt diese in ein TV-Signal, das im TV-Signals-Generator mischbar ist mit dem TV-Signal des Fernsehsenders.

Gemäß einer weiteren die Erfindung im Hinblick auf die Benutzerfreundlichkeit verbessernden Maßnahme ist vorgesehen, dass die Fernbedienung für das Home-Gateway nach Art einer tastaturgesteuerten Fernseh/Zusatzgerät-Fernbedienung als ein sprachgesteuertes Kommunikationsendgerät oder als ein textgesteuertes Kommunikationsgerät ausgebildet ist. Die beiden letztgenannten Kommunikationsgeräte können beispielsweise Mobilfunktelefone oder Festnetztelefone sei, welche in der Lage sind, vorzugsweise per SMS eine textgesteuerte Kommunikation zu realisieren.

Es wird weiterhin vorgeschlagen, dass die Fernbedienung mit einer am Telekommunikationsnetz angekoppelten Mensch/Maschinen-Schnittstelle des Home-Gateways zur Benutzerführung, zum Empfang der Interaktionen des Fernseh-Teilnehmers und zum Zurückleiten dieser Informationen an den Zentralserver verbunden ist. Alternativ hierzu ist es jedoch auch möglich, dass die Fernbedienung direkt über das Telekommunikationsnetz mit dem Zentralserver verbunden ist. In diesem Falle ist die besagte Fernbedienung vorzugsweise als Mobilfunktelefon, Festnetztelefon und dergleichen ausgebildet und die Kommunikation erfolgt sprach- oder textgesteuert.

Weitere die Erfindung verbessernde Maßnahmen werden nachstehend gemeinsam mit der Beschreibung zweier bevorzugter Ausführungsbeispiele der Erfindung anhand der Figuren näher dargestellt. Es zeigt:
- Fig.1: eine schematische Blockschaltbilddarstellung eines Systems zur Durchführung einer interaktiven Fernsehsitzung nach einem ersten Ausführungsbeispiel, und
- Fig.2: eine schematische Blockschaltbilddarstellung eines Systems zur Durchführung einer interaktiven Fernsehsitzung nach einem zweiten Ausführungsbeispiel.

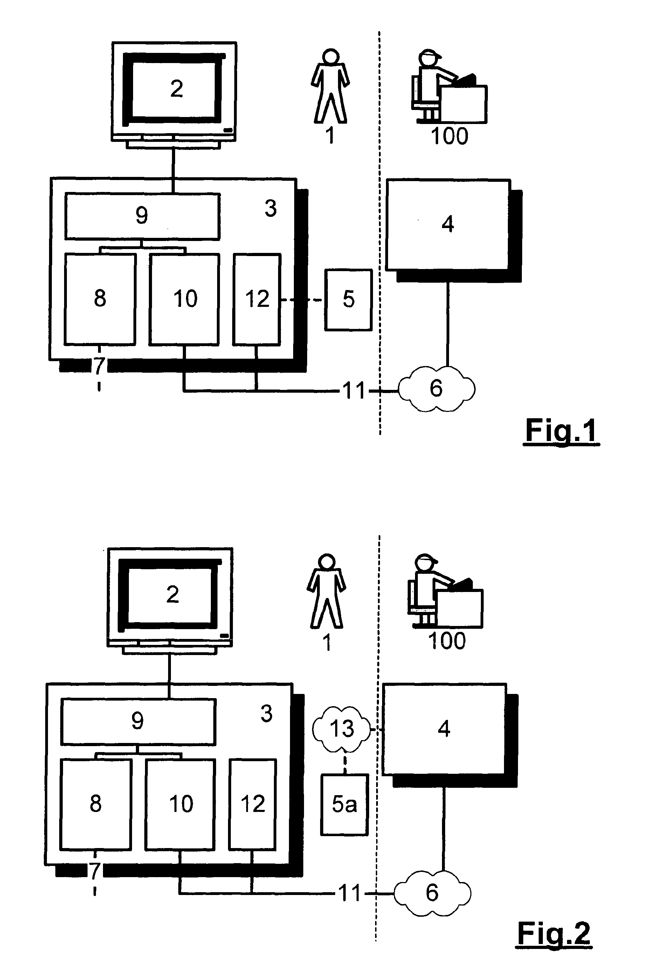

Gemäß Fig.1 ist seitens eines Fernseh-Teilnehmers 1 ein zur Wiedergabe eines interaktionsfähigen Fernsehprogramms dienendes Fernsehgerät 2 vorgesehen. Das Fernsehgerät 2 ist über eine Scart-Verbindung an ein Home-Gateway 3 als Zusatzgerät angeschlossen. Das Home-Gateway 3 ermöglicht es dem Fernseh-Teilnehmer 1 mit einem ortfernen Zentralserver 4 in Kontakt zu treten, der eine Overlay-Quelle als ferngesteuerte interaktive Anwendung für das interaktionsfähige Fernsehprogramm liefert. Die Overlay-Quelle erzeugt eine graphische Benutzeroberfläche, die das gewählte Fernsehprogramm bildlich überlagert, so dass der Fernsehteilnehmer 1 mit Hilfe einer Fernbedienung 5 über ein am Home-Gateway 3 anschließbares Telekommunikationsnetz 6 mit dem besagten Zentralserver 4 in Verbindung kommt. Auf diese Weise kann der Fernsehteilnehmer 1 auf Inhalte des parallel dargebotenen interaktiven Fernsehprogramms nach den durch die graphische Benutzeroberfläche bereitgestellten Optionen reagieren.

Das Telekommunikationsnetz 6 ist in diesem Ausführungsbeispiel das INTERNET und die Datenübertragung erfolgt breitbandig via DSL.

Das Home-Gateway 3 verfügt über einen TV-Quelle-Anschluss 7, mit welchem das TV-Signal empfangen wird. Das TV-Signal wird eingangsseitig einem im Home-Gateway 3 integrierten TV-Receiver 8 zugeführt, dessen Ausgangssignal einem mit dem Fernsehgerät 2 verbundenen TV-Signal-Generator 9 zugeht. Der TV-Signal-Generator 9 dient zum Mischen des TV-Signals mit dem Signal eines ebenfalls hieran angeschlossenen Overlay-Generators 10. Der Overlay-Generator 10 übersetzt die vom Telekommunikationsnetzanschluss 11 des Home-Gateway 3 bezogenen Overlay-Informationen des ortsfernen Zentralservers 4 in ein TV-Signal, welches dann vom TV-Signal-Generator 9 mit dem normalen TV-Signal gemischt werden kann.

Die Fernbedienung 5 ist in diesem Ausführungsbeispiel als eine tastaturgesteuerte Zusatzgerät-Fernbedienung für das Home-Gateway 3 ausgebildet. Die Fernbedienung 5 kommuniziert mit einer am Telekommunikationsnetz 6 angekoppelten Mensch/Maschine-Schnittstelle 12 des Home-Gateways 3. Über Tastendruck der Fernbedienung 5 empfängt das Home-Gateway 3 die Interaktionen des Fernsehteilnehmers 2 und leitet diese an den Zentralserver 4 des Dienst-Anbieters 100 weiter.

Gemäß dem in Figur 2 dargestellten Ausführungsbeispiel ist eine Fernbedienung 5a vorgesehen, welche hier nach Art eines Mobilfunktelefons ausgebildet ist. Mit der Fernbedienung 5a erfolgt eine sprachgesteuerte oder textgesteuerte Kommunikation über das Mobilfunknetz 13 direkt mit den Zentralserver 4. Ansonsten entspricht Aufbau und Funktion des zweiten Ausführungsbeispiels dem ersten Ausführungsbeispiel, worauf an dieser Stelle verwiesen wird, um Wiederholungen zu vermeiden.

### Bezugszeichenliste

- 1: Fernseh-Teilnehmer
- 2: Fernsehgerät
- 3: Home-Gateway
- 4: Zentralserver
- 5: Fernbedienung
- 6: Telekommunikationsnetz
- 7: TV-Quelle-Anschluss
- 8: TV-Receiver
- 9: TV-Signal-Generator
- 10: Overlay-Generator
- 11: Telekommunikationsnetzanschluss
- 12: Mensch/Maschine-Schnittstelle
- 13: Mobilfunknetz

## Patentansprüche

1. System zur Durchführung einer interaktiven Fernsehsitzung zwischen wenigstens einem Fernseh-Teilnehmer (1) und einem Dienst-Anbieter (100), mit einem zur Wiedergabe eines interaktionsfähigen Fernsehprogramms dienenden Fernsehgerät (2), das mit einem Home-Gateway (3) zur Auswahl der Overlay-Quelle einer vom Zentralserver (4) aus ferngesteuerten interaktiven Anwendung in Verbindung steht, um das gewählte Fernsehprogramm mit einer graphischen Benutzeroberfläche bildlich zu überlagern, so dass der Fernseh-Teilnehmer (1) mit Hilfe einer Fernbedienung (5; 5a) über ein am Home-Gateway (3) anschließbares Telekommunikationsnetz (6) mit dem Zentralserver (4) in Verbindung kommt, um auf Inhalte des dargebotenen interaktiven Fernsehprogramms nach den durch die graphische Benutzeroberfläche bereitgestellten Optionen zu reagieren,
**dadurch gekennzeichnet, dass** die Fernbedienung (5a) als ein sprachgesteuertes Kommunikationsendgerät oder als ein textgesteuertes Kommunikationsendgerät ausgebildet ist,
wobei das Kommunikationsendgerät ein Festnetztelefon oder ein Mobilfunktelefon ist,
welches über das Mobilfunknetznetz (13) mit dem Zentralserver (4) verbunden ist (Fig. 2).

2. System nach Anspruch 1,
**dadurch gekennzeichnet, dass** das Home-Gateway (3) als ein über eine SCART-Verbindung an das Fernsehgerät (2) anschließbares Zusatzgerät ausgebildet ist, das weiterhin einen TV-Quelle-Anschluss (7) und einen Telekommunikationsnetzanschluss (11) aufweist.

3. System nach Anspruch 1,
**dadurch gekennzeichnet, dass** das Home-Gateway (3) als Elektronikeinheit in das Fernsehgerät (2) integriert ist, dass außerdem einen Telekommunikationsnetzanschluss (11) aufweist.

4. System nach Anspruch 1,
**dadurch gekennzeichnet, dass** das Telekommunikationsnetz (6) das INTERNET ist, an welches das Home-Gateway (3) des Fernseh-Teilnehmers (1) über einen breitbandingen Kommunikationskanal angeschlossen ist.

5. System nach Anspruch 1,
**dadurch gekennzeichnet, dass** das Home-Gateway (3) einen mit dem TV-Quelle-Anschluss (7) eingangsseitig verbundenen TV-Receiver (8) enthält, dessen Ausgangssignal einem mit dem Fernsehgerät (2) verbindbaren TV-Signalgenerator (9) zum Mischen des TV-Signals mit dem Signal eines ebenfalls hieran angeschlossenen Overlay-Generators (10) zugeht, der die via Telekommunikationsnetz (6) empfangenen Overlay-Informationen der vom ortsfernen Zentralserver (4) bereitgestellten Overlay-Quelle in ein TV-Signal übersetzt.

6. Verfahren zur Durchführung einer interaktiven Fernsehsitzung mit einem System gemäß einem der vorstehenden Ansprüche, bei dem durch den Fernseh-Teilnehmer (1) ein interaktionsfähiges Fernsehprogramm über dessen Fernsehgerät (2) ausgewählt wird,
wobei vom Fernseh-Teilnehmer (1) anschließend eine Overlay-Quelle einer von einem Zentralserver (4) aus ferngesteuerten interaktiven Anwendung auswählt wird, durch die das gewählte Fernsehprogramm mit einer graphischen Benutzeroberfläche bildlich überlagert wird, so dass der Fernseh-Teilnehmer (1) mit Hilfe einer als Kommunikationsendgerät ausgebildeten Fernbedienung (5) mit dem Zentralserver (4) in Verbindung tritt, um auf Inhalte des dargebotenen Fernsehprogramms nach den durch die graphische Benutzeroberfläche bereitgestellten Optionen zu reagieren.

7. Verfahren nach Anspruch 6,
**dadurch gekennzeichnet, dass** nach Maßgabe der vom Fernseh-Teilnehmer (1) gewählten Option anschließend durch die interaktive Anwendung an den Fernseh-Teilnehmer (1) eine Reaktion in Form einer Darstellungsänderung auf der graphischen Benutzeroberfläche oder einer eingespielten akustischen Information ausgegeben wird.

8. Verfahren nach Anspruch 6,
**dadurch gekennzeichnet, dass** durch die Overlay-Quelle eine bildhafte Ausgabe der interaktiven Anwendung als Videostream oder nach Art einer regelmäßig aktualisierten Webseite durchgeführt wird.

9. Verfahren nach Anspruch 6,
**dadurch gekennzeichnet, dass** durch die interaktive Anwendung die Schnelligkeit einer Reaktion des Fernseh-Teilnehmers (1) auf einen Inhalt des Fernsehprogramms ermittelt wird.
